# FASCICULE DE BREVET EUROPEEN

(11) **EP 3 506 241 B1**
(45) Date de publication et mention de la délivrance du brevet: **04.09.2024**
(21) Numéro de dépôt: 18215644.8
(22) Date de dépôt: 21.12.2018
(51) Int. Cl.: G08G 5/00, G06F 3/038, G06F 3/01, G06F 3/02

(54) **DISPOSITIF ÉLECTRONIQUE D'INTERFACE ENTRE AU MOINS UN SYSTÈME AVIONIQUE ET UN ENSEMBLE DE CAPTEURS, INSTALLATION AVIONIQUE, PROCÉDÉ DE COMMUNICATION ET PROGRAMME D'ORDINATEUR ASSOCIÉS**
ELEKTRONISCHE SCHNITTSTELLENVORRICHTUNG ZWISCHEN MINDESTENS EINEM FLUGZEUGSYSTEM UND EINER GESAMTHEIT VON SENSOREN, ENTSPRECHENDE AVIONIKANLAGE, ENTSPRECHENDES KOMMUNIKATIONSVERFAHREN UND COMPUTERPROGRAMM
ELECTRONIC DEVICE FOR AN INTERFACE BETWEEN AT LEAST ONE AVIONICS SYSTEM AND A SET OF SENSORS, ASSOCIATED AVIONICS INSTALLATION, COMMUNICATION METHOD AND COMPUTER PROGRAM

(30) Priorité: 26.12.2017 FR 1701362
(43) Date de publication de la demande: 03.07.2019
(73) Titulaire: Thales, 92400 Courbevoie (FR)
(72) Inventeur: LAFON, Stéphanie, 33700 MERIGNAC (FR); RIPOCHE, Thomas, 33700 MERIGNAC (FR); BAILLARIN, Benoit, 31036 TOULOUSE (FR)
(74) Mandataire: Lavoix

(56) Documents cités:
- EP-A1- 2 916 309
- EP-A2- 2 254 105
- US-A1- 2010 280 983
- US-A1- 2012 078 448
- US-A1- 2016 009 411
- US-B1- 9 377 852

## Description

La présente invention concerne une installation avionique destinée à être embarquée à bord d'un aéronef, l'installation avionique comprenant au moins un système avionique, un ensemble de capteurs et un dispositif électronique d'interface connecté entre chaque système avionique et l'ensemble de capteurs.

L'invention concerne également un procédé de communication entre au moins un système avionique et un ensemble de capteurs, le procédé étant mis en oeuvre par un tel dispositif électronique d'interface propre être relié à chaque système avionique et aux capteurs et à être embarqué à bord d'un aéronef.

L'invention concerne également un programme d'ordinateur comportant des instructions logicielles qui, lorsqu'elles sont exécutées par un ordinateur, mettent en oeuvre un tel procédé de communication.

L'invention concerne alors le domaine des interfaces homme-machine, également appelées IHM ou MMI (de l'anglais *Man-Machine Interface*) pour la commande d'au moins un système avionique d'un aéronef, de préférence destinées à être implantées dans un cockpit d'aéronef.

Les cockpits d'aéronefs sont habituellement équipés de différents moyens interactifs qui permettent à un utilisateur d'interagir avec l'aéronef, dans le but d'effectuer une commande, telle qu'une commande de pilotage ou une modification de l'affichage sur un écran d'affichage. L'ensemble de ces moyens interactifs forme alors un dispositif de détection de signaux de l'utilisateur, également appelé interface homme-système, ou encore IHS.

A titre d'exemple, les cockpits d'avions comportent des moyens interactifs, généralement mécaniques, de type rotacteur, contacteur, boutons poussoirs ou encore interrupteurs.

En complément, des moyens interactifs tactiles permettent d'effectuer une commande par un simple toucher sur une surface tactile. Il est notamment connu d'intégrer de telles surfaces tactiles à un afficheur.

US 9 377 852 B1, US 2016/009411 A1, EP 2 254 105 A2, US 2012/078448 A1 et EP 2 916 309 A1 décrivent des cockpits d'avions qui comportent de tels moyens interactifs.

Toutefois, avec de telles interfaces homme-système, les modes d'interaction entre un utilisateur, tel qu'un pilote de l'aéronef, ou un équipement électronique au sein d'un cockpit d'aéronef, et l'interface homme-système sont limités.

Le but de l'invention est alors de proposer une installation avionique comprenant un dispositif électronique d'interface entre au moins un système avionique et un ensemble de capteurs, qui offre une meilleure interaction avec l'utilisateur ou l'équipement électronique, en permettant de prendre en compte différents signaux de l'utilisateur ou de l'équipement électronique et en offrant davantage de modes d'interaction possibles.

A cet effet, l'invention a pour objet une installation avionique selon la revendication 1.

Le dispositif électronique d'interface est alors également appelé interpréteur, en ce qu'il permet de gérer plusieurs modalités et d'interpréter, vis-à-vis du ou des systèmes avioniques correspondants, les signaux associés à ces différentes modalités.

Une plateforme comportant l'ensemble de capteurs et le dispositif électronique d'interface est alors également appelée plateforme multimodale.

Par modalité, on entend l'association d'un capteur et d'un langage permettant de retranscrire, en une information utile, un signal capté par le capteur. Une modalité se définit alors par le couple formé du capteur et du langage.

Le premier signal détecté par le module de détection est également appelé événement déclencheur, puisqu'il constitue l'événement déclenchant une séquence d'interactions successives entre l'utilisateur, ou l'équipement, et la plateforme multimodale.

L'ensemble des règles de détermination prédéfinies comporte par exemple un arbre de modalités indiquant la ou les modalités susceptibles d'intervenir dans l'interaction avec l'utilisateur ou l'équipement, ceci en fonction de l'événement déclencheur à l'origine de cette nouvelle interaction.

L'ensemble des règles de détermination prédéfinies comporte par exemple en outre des données de configuration du cockpit de l'aéronef, en complément de l'arbre de modalités, en vue de cette détermination des deux moteurs de reconnaissance vocale à activer en fonction du premier signal détecté et/ou en vue d'un traitement ultérieur des deux deuxièmes signaux acquis pour la génération du message.

L'ensemble des règles de détermination prédéfinies est par exemple stocké dans une base de données, destinée à être connectée au dispositif électronique d'interface. Cette base de données est apte à être synchronisée avec le cockpit de l'aéronef, au lancement de celui-ci, pour correspondre à une configuration courante du cockpit.

Suivant d'autres aspects avantageux de l'invention, l'installation avionique est selon l'une quelconque des revendications 2 à 6.

L'invention a également pour objet un procédé de communication selon la revendication 7.

L'invention a également pour objet un programme d'ordinateur selon la revendication 8.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'une installation avionique selon l'invention, destinée à être embarquée à bord d'un aéronef et comprenant plusieurs systèmes avioniques, un ensemble de capteurs et un dispositif électronique d'interface connecté entre chaque système avionique et l'ensemble de capteurs, et
- la figure 2 est un organigramme d'un procédé, selon l'invention, de communication entre au moins un système avionique et un capteur, le procédé étant mis en oeuvre par le dispositif électronique d'interface de la figure 1.

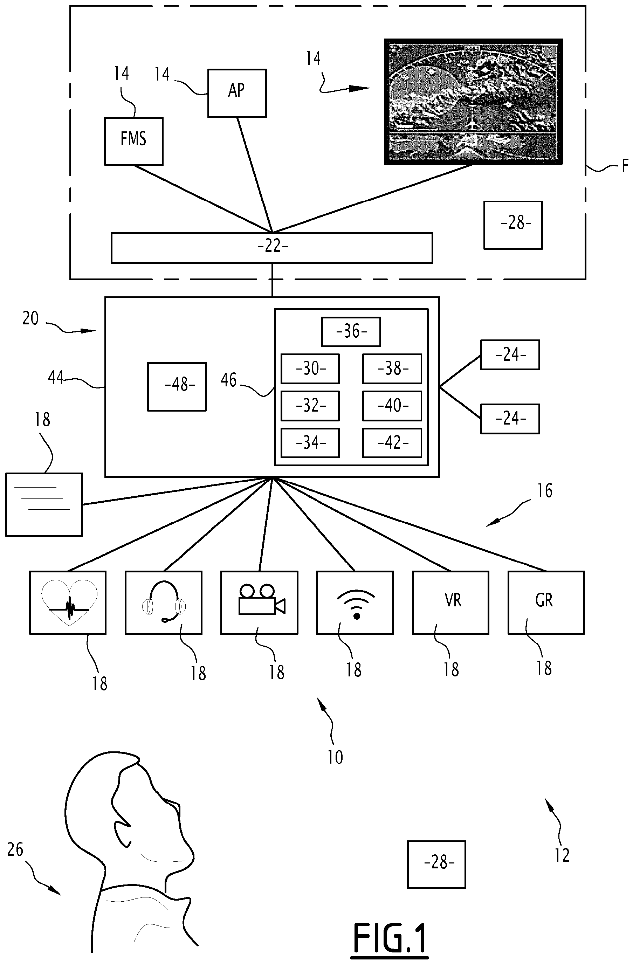

Sur la figure 1, une installation avionique 10, destinée à être embarquée à bord d'un aéronef 12, comprend au moins un système avionique 14, un ensemble 16 de capteurs 18 et un dispositif électronique d'interface 20 connecté entre chaque système avionique 14 et l'ensemble 16 de capteurs.

L'installation avionique 10 comprend de préférence plusieurs systèmes avioniques 14, comme par exemple trois systèmes avioniques 14 ainsi que représenté sur la figure 1.

En complément facultatif, l'installation avionique 10 comprend en outre au moins une passerelle sécurisée 22, interconnectée entre chaque système avionique 14 et le dispositif électronique d'interface 20. La passerelle sécurisée 22 est une passerelle informatique (de l'anglais *gateway*) formant, notamment pour le dispositif électronique d'interface 20, un point d'accès sécurisé à un monde fermé, ou encore sécurisé, auquel appartiennent les systèmes avioniques 14, le monde fermé étant délimité par la frontière F à la figure 1. La passerelle sécurisée 22 est alors à l'interface entre un monde ouvert auquel appartient le dispositif électronique d'interface 20 et au moins certains capteurs 18 de l'ensemble 16 et ledit monde fermé. Selon ce complément facultatif, le dispositif électronique d'interface 20 est connecté à chaque système avionique 14 via la passerelle sécurisée 22 correspondante.

En complément facultatif, l'installation avionique 10 comprend également au moins un dispositif de traitement 24 configuré pour traiter un signal, chaque dispositif de traitement 24 étant externe au dispositif d'interface 20. Dans l'exemple de la figure 1, l'installation avionique 10 comprend deux dispositifs de traitement 24, comme par exemple un dispositif de reconnaissance vocale d'une part et un dispositif de reconnaissance gestuelle d'autre part selon un exemple qui ne fait pas partie de l'invention revendiquée.

L'aéronef 12 est de préférence un avion. En variante, l'aéronef 12 est un hélicoptère ou encore un drone piloté à distance par un pilote.

Chaque système avionique 14 est un système électronique destiné à être embarqué à bord de l'aéronef 12 et à mettre en oeuvre une fonction avionique. Le système avionique 14 est par exemple un système de gestion de vol, également noté FMS (de l'anglais *Flight Management System*)*,* ou encore un pilote automatique, également noté AP (de l'anglais *Automatic Pilot*), ou encore un système de visualisation.

L'ensemble 16 comporte une pluralité de capteurs 18.

Par capteur, on entend de manière générale un élément électronique apte à capter une information ou un signal, puis éventuellement à traiter l'information ou le signal capté. Le signal capté par chaque capteur 18 est un signal émis par un utilisateur 26 ou un équipement électronique 28. L'homme du métier comprendra que l'équipement électronique 28 émettant le signal susceptible d'être capté par un capteur 18 est un équipement électronique du monde fermé ou bien un équipement électronique du monde ouvert, ledit équipement électronique 28 n'étant pas nécessairement embarqué à bord de l'aéronef 12.

Chaque signal de l'utilisateur 26 est alors notamment un signal choisi parmi le groupe consistant en : un signal gestuel, un toucher sur une surface tactile, une action sur un élément mécanique, un signal vocal, un signal visuel et un signal physiologique.

Le signal de l'équipement électronique 28 est un signal de données, ledit signal de données étant de préférence un signal électrique, radioélectrique ou encore lumineux.

Différents types de capteurs 18 de l'ensemble 16 sont illustrés à titre d'exemple sur la figure 1. Le capteur 18 est par exemple un capteur tactile, représenté par un symbole à trois traits parallèles, configuré pour capter un ou plusieurs touchers tactiles et les positions associées de ces touchers, ces touchers tactiles étant typiquement effectués par contact de doigt(s) de l'utilisateur avec le capteur tactile. Le capteur tactile est généralement en forme d'une surface tactile intégrée à un écran d'affichage, ou encore à un pavé tactile (de l'anglais *trackpad*)*.*

L'homme du métier observera que l'équipement électronique 28 est également apte à comporter un capteur tactile, et le cas échéant, un toucher tactile de l'utilisateur 26 est alors également susceptible d'être capté indirectement via l'équipement électronique 28.

Le capteur 18 est par exemple un capteur physiologique, symbolisé par un coeur, configuré pour capter un signal physiologique de l'utilisateur 28. Le signal physiologique est par exemple un pouls, un rythme cardiaque ou des pulsations cardiaques, un niveau de sudation, ou encore une activité cérébrale de l'utilisateur 26. Le capteur physiologique est par exemple un capteur cardiaque ou encore un accéléromètre disposé au contact de l'utilisateur 26.

Le capteur 18 est par exemple un capteur sonore, symbolisé par un microphone, configuré pour capter un signal audio. Le signal audio est par exemple un signal vocal, c'est-à-dire un signal sonore émis par l'utilisateur 26, en particulier par ses cordes vocales. Le capteur sonore est par exemple un microphone acoustique, ou encore un microphone ostéophonique placé au contact du visage de l'utilisateur 26.

Le capteur 18 est par exemple un capteur d'images, symbolisé par une caméra, configuré pour capter une image d'une scène vers laquelle pointe ledit capteur. Le capteur d'images est par exemple un capteur d'images dans le domaine visible, ou encore un capteur d'images infrarouges. Le capteur 18 est par exemple un récepteur de données, représenté par un symbole WiFi, configuré pour recevoir un signal de la part de l'équipement électronique 28. Le récepteur de données est par exemple un récepteur radioélectrique configuré pour recevoir le signal de l'équipement électronique 28 sous forme d'ondes radioélectriques, ou encore un récepteur filaire configuré pour recevoir le signal dudit équipement électronique 28 via une liaison filaire de données.

Le capteur 18 est par exemple également un moteur de reconnaissance vocale, représenté par le symbole VR (de l'anglais *Voice Recognition*), configuré pour, d'une part, capter un signal vocal, puis d'autre part, effectuer une transcription du signal vocal capté en un ensemble de mots. Autrement dit, le moteur de reconnaissance vocale est un dispositif de reconnaissance vocale combiné à un microphone.

Le capteur 18 est par exemple un moteur de reconnaissance gestuelle, représenté par le symbole GR (de l'anglais *Gestual Recognition*), configuré pour, d'une part, capter un signal gestuel de l'utilisateur 26, puis d'autre part, identifier le geste capté.

Le capteur 18 est aussi par exemple un capteur mécanique, non représenté, tel qu'un bouton physique, par exemple un bouton poussoir, apte à être activé par l'utilisateur 26, ou encore un rotacteur physique, configuré pour capter une action de rotation effectuée par l'utilisateur 26 sur ledit rotacteur.

Le capteur 18 est par exemple un capteur de mouvement configuré pour capter un mouvement de l'utilisateur 26, tel qu'un signal gestuel effectué par l'utilisateur 26, c'est-à-dire un mouvement de l'un de ses membres ou de sa tête.

Le capteur 18 est par exemple un capteur de suivi du regard (de l'anglais *eye tracking*) configuré pour capter un signal visuel de l'utilisateur 26, c'est-à-dire un signal généré par un oeil ou les deux yeux de l'utilisateur 26, tel que par exemple un mouvement du regard de l'utilisateur 26 ou un clignement d'oeil ou d'yeux de l'utilisateur 26, ou encore une variation de la taille de la pupille de l'utilisateur 26 par rapport à une taille prédéfinie de pupille.

D'autres types de capteurs 18 sont encore possibles, tels qu'un capteur de luminosité configuré pour capter un niveau de luminosité, ou encore un capteur de pression configuré pour capter un niveau de pression.

Le dispositif électronique d'interface 20 est configuré pour interconnecter chaque système avionique 14 et le ou les capteurs 18 de l'ensemble 16, chaque système avionique 14 et les capteurs 18 étant propres à être reliés au dispositif électronique d'interface 20. Il est également appelé interpréteur, en ce qu'il permet d'interpréter des signaux acquis du ou des capteurs 18, pour en retranscrire une information utile à destination du ou des systèmes avioniques 14.

Le dispositif électronique d'interface 20 est destiné à être embarqué à bord de l'aéronef 12 et comprend un module de détection 30 configuré pour détecter un premier signal, le premier signal étant apte à être émis par l'utilisateur 26 ou l'équipement électronique 28, et reçu par un premier capteur 18 de l'ensemble 16 de capteurs.

Le dispositif électronique d'interface 20 comprend également un module d'activation 32 configuré pour activer au moins un deuxième capteur 18 de l'ensemble 16 de capteurs, aux fins de réception d'un deuxième signal émis par l'utilisateur 26 ou l'équipement électronique 28. Chaque deuxième capteur 18 est alors déterminé en fonction du premier signal détecté et de règles de détermination prédéfinies.

Le dispositif électronique d'interface 20 comprend également un module d'acquisition 34 configuré pour acquérir le deuxième signal, reçu par chaque deuxième capteur et un module de génération 36 configuré pour générer un message correspondant au deuxième signal acquis et pour transmettre ledit message à un ou plusieurs systèmes avioniques 14 correspondants.

Selon l'invention, le module d'activation 32 est, pour certain(s) évènement(s) déclencheur(s), c'est-à-dire premier(s) signal(aux) détecté(s), configuré pour activer plusieurs deuxièmes capteurs 18 de l'ensemble 16 de capteurs, destinés à recevoir chacun un deuxième signal émis par l'utilisateur 26. Le module d'acquisition 34 est alors configuré pour acquérir tous les deuxièmes signaux, reçus de la pluralité de deuxièmes capteurs 18 activés. Le module de génération 36 sera alors configuré au besoin pour sélectionner seulement une partie des deuxièmes signaux acquis, tel qu'un seul deuxième signal en particulier, parmi l'ensemble des deuxièmes signaux acquis, par exemple en analysant la cohérence des deuxièmes signaux acquis pour sélectionner le ou les plus probables.

En complément facultatif, le dispositif électronique d'interface 20 comprend en outre un deuxième module d'activation 38 configuré pour activer au moins un dispositif de traitement 24 afin de traiter le deuxième signal acquis, et un deuxième module d'acquisition 40 configuré pour acquérir le deuxième signal traité de la part du dispositif de traitement 24, le module de génération 36 étant alors configuré pour générer un message correspondant au deuxième signal traité.

En complément facultatif encore, le dispositif électronique d'interface 20 comprend en outre un module d'enregistrement 42 configuré pour enregistrer au moins un deuxième signal acquis, le module d'enregistrement 42 étant de préférence configuré pour enregistrer un deuxième signal acquis courant en cas d'activation d'un dispositif de traitement 24 correspondant par le deuxième module d'activation 38 pour un deuxième signal acquis précédent, puis d'absence de réception du deuxième signal précédent traité correspondant, c'est-à-dire en cas d'absence d'acquisition, par le deuxième module d'acquisition 40, du deuxième signal précédent traité. Autrement dit, le module d'enregistrement 42 est configuré pour enregistrer un deuxième signal acquis en cas d'indisponibilité du dispositif de traitement 24 correspondant pour traiter le deuxième signal après son acquisition par le module d'acquisition 34.

Selon ce complément facultatif, lorsque le dispositif de traitement 24 est à nouveau disponible pour traiter un deuxième signal, le module d'enregistrement 42 est alors configuré pour transmettre successivement chaque deuxième signal enregistré audit dispositif de traitement 24. Ceci permet alors d'effectuer un traitement différé du ou des deuxièmes signaux enregistrés, en cas d'une précédente indisponibilité temporaire du dispositif de traitement 24 correspondant.

Dans l'exemple de la figure 1, le dispositif électronique d'interface 20 comprend une unité de traitement d'informations 44 formée par exemple d'une mémoire 46 et d'un processeur 48 associé à la mémoire 46.

Dans l'exemple de la figure 1, le module de détection 30, le module d'activation 32, le module d'acquisition 34 et le module de génération 36, ainsi qu'en complément facultatif le deuxième module d'activation 38, le deuxième module d'acquisition 40 et le module d'enregistrement 42, sont réalisés chacun sous forme d'un logiciel, ou d'une brique logicielle, exécutable par le processeur 48. La mémoire 46 du dispositif électronique d'interface 20 est alors apte à stocker un logiciel de détection configuré pour détecter le premier signal reçu par un premier capteur 18, un logiciel d'activation configuré pour activer au moins un deuxième capteur 18, en fonction du premier signal détecté et de règles de détermination prédéfinies, un logiciel d'acquisition configuré pour acquérir le deuxième signal, reçu par chaque deuxième capteur 18, et un logiciel de génération configuré pour générer le message correspondant au deuxième signal acquis et pour le transmettre à un ou plusieurs systèmes avioniques 14 correspondants. En complément facultatif, la mémoire 46 est apte à stocker un deuxième logiciel d'activation configuré pour activer au moins un dispositif de traitement 24 pour le traitement du deuxième signal acquis, et un deuxième logiciel d'acquisition configuré pour acquérir le deuxième signal traité de la part du dispositif de traitement 24, le logiciel de génération étant alors configuré pour générer le message correspondant au deuxième signal traité. En complément facultatif encore, la mémoire 46 est apte à stocker un logiciel d'enregistrement configuré pour enregistrer au moins un deuxième signal acquis, en particulier pour enregistrer un deuxième signal acquis courant en cas d'activation d'un dispositif de traitement 24 pour un deuxième signal acquis précédent et d'absence de retour de la part dudit dispositif de traitement 24, c'est-à-dire d'absence d'acquisition par le deuxième logiciel d'acquisition du deuxième signal précédent traité. Le processeur 48 est alors apte à exécuter chacun des logiciels parmi le logiciel de détection, le logiciel d'activation, le logiciel d'acquisition et le logiciel de génération, ainsi qu'en complément facultatif le deuxième logiciel d'activation, le deuxième logiciel d'acquisition et le logiciel d'enregistrement.

En variante non représentée, le module de détection 30, le module d'activation 32, le module d'acquisition 34 et le module de génération 36, ainsi qu'en complément facultatif le deuxième module d'activation 38, le deuxième module d'acquisition 40 et le module d'enregistrement 42, sont réalisés chacun sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Spécifie Integrated Circuit).*

Lorsque le dispositif électronique d'interface 20 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est, par exemple, un medium apte à mémoriser des instructions électroniques et à être couplé à un bus d'un système informatique. A titre d'exemple, le support lisible est une disquette ou disque souple (de l'anglais *Floppy Disk*), un disque optique, un CD-ROM, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module de détection 30 est relié à l'ensemble 16 de capteurs et est apte à détecter un premier signal reçu par un premier capteur 18 de l'ensemble 16.

Le premier signal est par exemple un appui sur une surface tactile associée à une interface homme/machine, tel qu'un appui sur une zone faisant appel à de la reconnaissance vocale. Le premier signal est par exemple un appui sur un bouton physique, tel qu'un bouton associé à une commande prédéfinie, par exemple une commande vocale.

A titre d'exemple complémentaire, le premier signal est l'observation par l'utilisateur 26 d'une zone spécifique, le premier signal étant alors détecté lorsque le regard de l'utilisateur 26 est dirigé vers cette zone spécifique.

Le premier signal est encore par exemple un signal vocal, tel qu'un mot-clé énoncé oralement par l'utilisateur 26.

A titre d'exemple complémentaire encore, le premier signal est un signal gestuel, tel que l'entrée de la main de l'utilisateur 26 dans une zone géographique donnée, ou encore un geste particulier de l'utilisateur, tel qu'un geste avec un ou plusieurs de ses membres, par exemple ses avant-bras.

Le premier signal est par exemple un état particulier de l'utilisateur 26, capté par un capteur physiologique, tel qu'un état de stress supérieur à un seuil prédéfini.

En variante, le premier signal détecté par le module de détection 30 est un signal émis par l'équipement électronique 28, ce signal étant par exemple un élément particulier d'une mission de l'aéronef 12, tel que l'entrée dans une phase spécifique du vol de l'aéronef 12, la réception d'une alerte ou encore d'un message.

Lorsque le premier signal est un signal émis par l'équipement électronique 28, ce premier signal est par exemple encore un évènement du système avionique, tel qu'un appel d'une fonction avionique, une panne dans l'aéronef 12 ou encore l'allumage d'un voyant dans le cockpit de l'aéronef 12.

A titre d'exemple complémentaire encore, le premier signal émis par l'équipement électronique 28 est un évènement provenant du monde ouvert, tel que la réception d'un appel depuis l'équipement électronique 28 se trouvant alors dans le monde ouvert, soit à l'intérieur de l'aéronef 12 ou encore au sol.

Le module de détection 30 est de préférence configuré pour écouter en permanence, c'est-à-dire pour surveiller en permanence, les signaux reçus par les différents capteurs 18 de l'ensemble 16, afin de détecter ce premier signal, formant un évènement déclencheur.

L'homme du métier comprendra que la détection, par le module de détection 30, de ce premier signal en tant qu'évènement déclencheur est par exemple effectuée par comparaison avec une liste prédéfinie d'évènements déclencheurs.

Le module d'activation 32 est alors configuré pour activer au moins un deuxième capteur 18 de l'ensemble 16 en fonction du premier signal détecté et des règles de détermination prédéfinies, le ou chaque deuxième capteur 18 ainsi activé étant alors apte à capter un deuxième signal de la part de l'utilisateur 26 ou de l'équipement électronique 28.

Chaque deuxième capteur 18 activé par le module d'activation 32 est de préférence de type distinct de celui du premier capteur 18 ayant reçu le premier signal détecté par le module de détection 30.

L'ensemble des règles de détermination prédéfinies permettant de déterminer le ou les deuxièmes capteurs 18 à activer, en fonction du premier signal détecté par le module de détection 30, est par exemple défini à partir d'un arbre de modalités indiquant la ou les modalités, en particulier le ou les deuxièmes capteurs 18, susceptibles d'intervenir dans l'interaction avec l'utilisateur 26 ou l'équipement 28, ceci en fonction du premier signal détecté à l'origine de cette nouvelle interaction entre l'utilisateur 26 ou l'équipement électronique 28 et le dispositif électronique d'interface 20.

L'arbre des modalités est par exemple un arbre prédéfini, décrivant à un instant temporel donné l'ensemble des interactions possibles dans le cockpit de l'aéronef 12. A titre d'exemple, cet arbre de modalités est défini en spécifiant les interactions prises en compte par le dispositif électronique d'interface 20, par exemple en effectuant les sous-étapes suivantes pour chaque interaction : définition de l'évènement déclencheur de l'interaction, définition de l'ensemble des modalités, en particulier du ou des deuxièmes capteurs 18, intervenant dans l'interaction, et détermination de propriétés CARE caractérisant les relations entre ces modalités. Les propriétés CARE comportent les propriétés suivantes : complémentarité, assignation, redondance et équivalence. La complémentarité correspond au cas où deux modalités apportent des informations complémentaires utiles à l'interaction considérée. L'assignation correspond au cas où l'interaction s'effectue avec une unique modalité. La redondance correspond au cas où deux modalités apportent un même type d'informations, cette redondance étant utile pour sécuriser par exemple une interaction. L'équivalence correspondant au cas où une même interaction est réalisable par plusieurs types distincts de modalités, ceci de façon indépendante.

La définition de l'arbre des modalités comprend ensuite par exemple la création de noeuds et de liens, avec le regroupement en un même noeud d'évènements déclencheurs identiques, avec la création d'un lien entre un noeud correspondant à un évènement déclencheur et un noeud correspondant à une modalité associée à cet évènement déclencheur. En complément facultatif, chaque interaction est insérée sous forme d'un sous-arbre dans l'arbre global de modalités.

La définition de l'arbre des modalités comprend ensuite par exemple la définition de lois de sélection et de validation de l'action finale associée à l'interaction, ces lois de sélection et de validation permettant au dispositif électronique d'interface 20, en particulier au module d'activation 32, de déterminer le ou les deuxièmes capteurs 18 à activer, notamment en cas de conflit sur un premier signal, c'est-à-dire un évènement déclencheur, commun à deux interactions et/ou de valider le deuxième signal acquis, c'est-à-dire la donnée issue de la modalité, s'il n'y a pas de conflit relatif à l'évènement déclencheur. Ces lois de sélection et de validation permettent également au module d'activation 32 de déterminer lorsque plusieurs deuxièmes capteurs 18 sont à activer, suite à la détection d'un premier signal nécessitant l'activation ultérieure de plusieurs deuxièmes capteurs 18. Des exemples d'activation simultanée de plusieurs deuxièmes capteurs 18 seront décrits par la suite.

Le module d'acquisition 34 est configuré pour acquérir le deuxième signal, reçu par chaque deuxième capteur précédemment activé par le module d'activation 32. Le module d'acquisition 34 est par exemple configuré pour écouter chaque deuxième capteur activé 18 à partir de l'instant d'activation, l'acquisition du deuxième signal s'effectuant alors au fur et à mesure. En variante, le module d'acquisition 34 est configuré pour acquérir le deuxième signal à l'issue de sa réception complète par le deuxième capteur 18 considéré, le deuxième capteur 18 stockant alors le deuxième signal reçu au fur et à mesure de sa réception, et le transmettant au module d'acquisition 34 seulement lorsque la réception du deuxième signal est terminée.

Le module de génération 36 est configuré pour générer un message correspondant au deuxième signal acquis, puis pour le transmettre au(x) système(s) avionique(s) 14 correspondant(s).

En complément facultatif le module de génération 36 est configuré en outre pour vérifier la cohérence de chaque deuxième signal acquis en fonction de règles de vérification prédéfinies, et pour, en cas d'incohérence du deuxième signal acquis par rapport aux règles de vérification prédéfinies, ignorer ledit deuxième signal acquis. Les règles de vérification prédéfinies sont par exemple incluses dans l'arbre des modalités, tel que décrit précédemment, notamment dans les lois de validation.

En complément facultatif encore, le module de génération 36 est configuré en outre, lorsque plusieurs deuxièmes capteurs 18 sont activés par le module d'activation 32, pour sélectionner un deuxième signal parmi les deuxièmes signaux acquis en fonction de règles de sélection prédéfinies, et pour générer alors le message correspondant au deuxième signal sélectionné. Les règles de sélection prédéfinies sont par exemple incluses dans l'arbre de modalités, tel que décrit précédemment, notamment dans les lois de sélection.

L'homme du métier observera que, lorsque plusieurs deuxièmes capteurs 18 sont activés par le module d'activation 32, deux alternatives sont possibles pour la génération du message.

Selon une première alternative qui ne correspond pas à l'invention telle que revendiquée, tous les deuxièmes signaux acquis de la part des deuxièmes capteurs 18 activés sont nécessaires pour la génération du message, et le module de génération 36 ne sélectionne alors pas un deuxième signal en particulier parmi les deuxièmes signaux acquis.

Selon une deuxième alternative, seulement une partie des deuxièmes signaux acquis, tel qu'un seul deuxième signal en particulier, parmi l'ensemble des deuxièmes signaux acquis est nécessaire pour la génération du message, et le module de génération 36 sélectionne alors ladite partie des deuxièmes signaux parmi l'ensemble des deuxièmes signaux acquis. Selon l'invention, lorsque deux moteurs de reconnaissance vocale sont activés par le module d'activation 32 avec une grammaire respective pour chaque moteur de reconnaissance vocale, les deux grammaires étant distinctes, le module de génération 36 est alors configuré pour évaluer les deux deuxièmes signaux acquis de la part des deux moteurs de reconnaissance vocale, puis pour sélectionner le deuxième signal acquis ayant le meilleur niveau de confiance, c'est-à-dire le niveau de confiance le plus élevé.

En complément facultatif encore, le module de génération 36 est configuré en outre pour appliquer un traitement au deuxième signal en fonction de données de configuration du cockpit de l'aéronef 12, et pour générer alors un message correspondant à ce deuxième signal traité. Ce traitement est également appelé post-traitement, ou encore traitement ultérieur, en ce qu'il correspond au dernier traitement effectué avant la génération du message.

L'homme du métier comprendra alors que ce post-traitement vise à réduire ensuite les actions ou traitements à effectuer par le ou les systèmes avioniques 14 recevant le message. A titre d'exemple, le post-traitement est un changement de référentiel pour indiquer vers quel écran regarde l'utilisateur 26, ce qui permet alors de rendre plus intelligibles, pour le système avionique 14 récepteur, les données reçues à l'intérieur du message. Ce post-traitement est, par exemple, basé au moins en partie sur la base de données de configuration du cockpit.

L'homme du métier comprendra que ce post-traitement forme alors une interprétation du deuxième signal reçu par le dispositif d'interface 20 en le message transmis au système avionique 14 concerné, d'où le nom d'interpréteur également donné au dispositif électronique d'interface 20 selon l'invention.

En complément facultatif, le deuxième module d'activation 38 est configuré pour activer au moins un dispositif de traitement 24 externe et pour transmettre le deuxième signal acquis audit dispositif de traitement externe 24, afin que le dispositif de traitement 24 effectue le traitement associé sur ledit deuxième signal.

Selon ce complément facultatif, le dispositif de traitement externe 24 activé par le deuxième module d'activation 38 est par exemple un dispositif de reconnaissance vocale, le traitement appliqué étant alors un algorithme de reconnaissance vocale, afin de convertir le deuxième signal acquis, en l'occurrence un signal vocal, en un texte correspondant à la transcription de ce signal vocal. En variante, le dispositif de traitement externe 24 activé par le deuxième module d'activation 38 est un dispositif de reconnaissance gestuelle, configuré alors pour appliquer un algorithme de reconnaissance gestuelle au deuxième signal acquis afin d'identifier le geste capté. Le signal gestuel capté est par exemple un ensemble d'images successives, et l'algorithme de reconnaissance gestuelle est alors un algorithme de traitement d'images appliqué à la succession d'images acquises, afin d'identifier dans les images acquises le geste concerné, tel qu'une levée de doigt(s) de l'utilisateur 26, ou encore un mouvement spécifique, tel qu'un balayage d'un membre de l'utilisateur 26. En complément, l'algorithme de reconnaissance gestuelle est également apte à déterminer les positions en trois dimensions, par exemple dans le repère du capteur gestuel, d'un ou plusieurs noeuds caractéristiques d'une modélisation de l'utilisateur 26, ces noeuds de la modélisation correspondant typiquement à des articulations de l'utilisateur 26, ou à des extrémités de l'utilisateur 26, telles que des bouts de doigts. En complément encore, l'algorithme de reconnaissance gestuelle est également apte à déterminer les vecteurs directeurs clés, tels que la direction des doigts de l'utilisateur, ou encore de membres de l'utilisateur 26, tels qu'un ou plusieurs de ses avant-bras.

Selon ce complément facultatif, le deuxième module d'acquisition 40 est alors configuré pour acquérir le deuxième signal traité de la part du dispositif de traitement externe 24, cette acquisition consistant par exemple en la réception du deuxième signal traité de la part dudit dispositif de traitement 24, le dispositif de traitement 24 étant adapté pour transmettre automatiquement, à l'issue dudit traitement, le signal traité au dispositif électronique d'interface 20, en particulier à son deuxième module d'acquisition 40.

Selon ce complément facultatif, le module de génération 36 est alors configuré pour générer le message correspondant au deuxième signal traité. L'homme du métier comprendra en outre que lorsque le module de génération 36 est configuré pour appliquer un post-traitement au deuxième signal, ceci en fonction des données de configuration du cockpit de l'aéronef 12, alors le post-traitement est appliqué au deuxième signal traité acquis par le deuxième module d'acquisition 40.

En complément facultatif encore, le module d'enregistrement 42 est configuré pour enregistrer, c'est-à-dire stocker, au moins un deuxième signal acquis, l'enregistrement étant par exemple effectué dans la mémoire 46. Le module d'enregistrement 42 est de préférence configuré pour enregistrer un deuxième signal acquis seulement en cas de retard de la part du dispositif de traitement externe 24 dans le traitement des deuxièmes signaux, cet enregistrement visant alors à éviter une perte de données, et à garantir que chaque deuxième signal acquis sera bien pris en compte et traité au fur et à mesure de la disponibilité du dispositif de traitement externe 24. Le module d'enregistrement 42 est alors configuré pour enregistrer un deuxième signal acquis courant seulement en cas d'activation du dispositif de traitement 24 par le deuxième module d'activation 38 pour un deuxième signal acquis précédent et d'absence de retour de la part du dispositif de traitement 24 pour ce deuxième signal acquis précédent, c'est-à-dire en cas d'absence d'acquisition, par le deuxième module d'acquisition 40, du deuxième signal précédent traité, issu du dispositif de traitement externe 24.

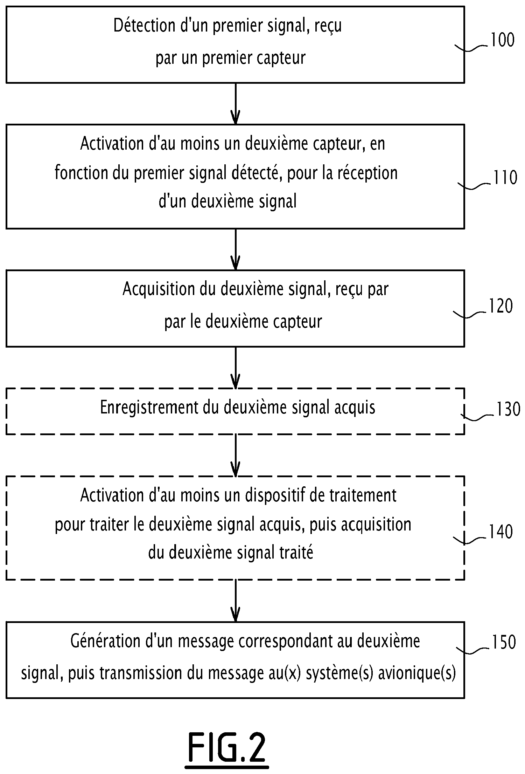

Le fonctionnement du dispositif électronique d'interface 20 va désormais être expliqué à l'aide de la figure 2 représentant un organigramme du procédé, selon l'invention, de communication entre l'ensemble 16 de capteurs 18 et le ou les systèmes avioniques 14, le procédé étant mis en oeuvre par le dispositif électronique d'interface 20.

Ce procédé de communication va d'abord être décrit de manière générale, et différents cas d'utilisation seront décrits ensuite à titre d'exemples plus détaillés.

Lors d'une étape initiale 100, le dispositif électronique d'interface 20 détecte, via son module de détection 30, un premier signal, reçu par un premier capteur 18 de l'ensemble 16. Comme indiqué précédemment, ce premier signal constitue un évènement déclencheur pour une nouvelle interaction entre l'ensemble 16 de capteurs, d'une part, et le ou les systèmes avioniques 14 d'autre part, cette interaction étant gérée par le dispositif électronique d'interface 20 qui, comme son nom l'indique, effectue alors l'interface entre l'ensemble 16 de capteurs et le ou les systèmes avioniques 14.

Le dispositif d'interface 20 active ensuite, lors de l'étape 110 et via son module d'activation 32, au moins un deuxième capteur 18 de l'ensemble 16, cette activation étant effectuée en fonction du premier signal détecté et des règles de détermination prédéfinies. Cette activation du ou des deuxièmes capteurs 18 déclenche alors la réception d'un deuxième signal par chaque deuxième capteur 18 correspondant.

Le dispositif d'interface 20 acquiert ensuite, lors de l'étape 120 et via son module d'acquisition 34, le deuxième signal qui a été reçu par le deuxième capteur 18 précédemment activé lors de l'étape 110.

Lors de l'étape suivante 130 facultative, le dispositif d'interface 20 enregistre, si nécessaire et via son module d'enregistrement 42, le deuxième signal acquis, ceci afin d'éviter une perte d'informations, dans le cas où l'acquisition des deuxièmes signaux s'effectue plus rapidement que leur traitement effectué postérieurement par le dispositif de traitement externe 24. En effet, le module d'enregistrement 42 effectue de préférence cet enregistrement seulement lorsqu'il détecte qu'un nouveau deuxième signal a été acquis, alors que le deuxième signal acquis précédemment n'a pas encore été traité par le dispositif de traitement externe 24, c'est-à-dire que le dispositif de traitement externe 24 a été activé par le deuxième module d'activation 38, mais que le deuxième module d'acquisition 40 n'a pas encore reçu en retour le deuxième signal traité correspondant, de la part du dispositif de traitement externe 24.

Lors de l'étape suivante 140, également facultative, le dispositif d'interface 20 active, via son deuxième module d'activation 38, un dispositif de traitement externe 24 correspondant et lui transmet le deuxième signal acquis en vue de son traitement, puis le dispositif d'interface 20 acquiert, via son deuxième module d'acquisition 40, le deuxième signal traité, une fois ledit traitement effectué par le dispositif de traitement externe 24.

Le dispositif d'interface 20 effectue enfin, lors de l'étape 150 et via son module de génération 36, la génération d'un message correspondant au deuxième signal, puis la transmission de ce message au(x) système(s) avionique(s) 14 correspondant(s). Cette génération du message est effectuée, le cas échéant, à partir du deuxième signal traité.

En complément facultatif, lors de cette étape 150, le module de génération 36 applique en outre un post-traitement au deuxième signal, ceci en fonction de données de configuration du cockpit de l'aéronef 12, et le message généré correspond alors au deuxième signal issu de ce post-traitement.

Lors de l'étape 150, le module de génération 36 met alors le message généré à disposition du ou des systèmes avioniques 14, ce message généré correspondant par exemple à une donnée brute issue des modalités, ces données étant spécifiques du langage lié à la modalité. A titre d'exemple, les données mises à disposition du ou des systèmes avioniques 14 sont des données ou grandeurs techniques, telles que des fréquences, des vitesses, des caps, des altitudes, ou encore des points de passage.

En variante ou en complément, le message mis à la disposition de ou des systèmes avioniques 14 correspond à une donnée réifiée, le dispositif d'interface 20 aidant alors, via son module de génération 36, le système avionique 14 correspondant à intégrer l'information brute issue des modalités en effectuant le post-traitement, ou traitement ultérieur, tel que décrit précédemment. A titre d'exemple de réification, le module de génération 36 effectue un typage de données alphanumériques reçues, à partir de plusieurs mots clés reconnus dans un message de données reçu et à partir de mots spécifiques d'une grammaire. Par exemple, le module de génération 36 reconnaît que dans un message de données tel que « descend 100 » ou encore « descend flight level 100 » la valeur 100 correspond à une altitude, et transmet alors cette information d'altitude au système avionique 14 correspondant. A titre d'exemple complémentaire, le post-traitement effectué par le module de génération 36 est un changement de repère, par exemple pour faire passer des coordonnées d'un repère local associé à l'un des capteurs 18 à un repère connu du système avionique 14.

En variante encore ou en complément, le message généré puis transmis au système avionique 14 est une commande du système avionique 14. Le cas échéant, le système avionique 14 est apte à exécuter directement la commande reçue de la part du dispositif d'interface 20, ou bien à la soumettre à l'utilisateur 26, tel que le pilote de l'aéronef 12, pour validation, avant de l'exécuter. Ce choix entre ces deux alternatives possibles, c'est-à-dire exécuter directement la commande reçue, ou bien la faire préalablement valider par le pilote de l'aéronef, dépend de la criticité de la commande reçue.

A titre d'exemple, la commande apte à être générée, puis transmise par le dispositif d'interface 20 est un changement de fréquence, un changement de vitesse, un changement de cap, un changement d'altitude, une reconfiguration de l'affichage dans le cockpit de l'aéronef 12, avec par exemple des changements de format, de paramétrage d'interface homme/machine ou encore une reconfiguration globale du cockpit, un changement de valeurs du système, tel qu'une température, ou un paramètre de climatisation, à l'intérieur de l'aéronef 12, un agrandissement ou au contraire un zoom arrière sur une carte affichée, ou encore l'envoi d'un message sur une liaison de données (de l'anglais *Data Link*)*.*

Quelques exemples d'interactions multimodales vont à présent être décrits pour illustrer quelques cas d'utilisation du dispositif d'interface 20 selon l'invention.

Un premier cas d'utilisation correspond à un toucher suivi d'une commande vocale (de l'anglais *Touch and Talk*), pour lequel le premier signal, ou évènement déclencheur, est un appui de l'utilisateur 26 sur une zone spécifique d'une surface tactile d'une interface homme/machine, suivi de l'énoncé par l'utilisateur 26 d'une commande vocale dédiée à cette zone. Selon ce premier cas d'utilisation, le premier capteur est alors un capteur tactile intégré à la surface tactile, et le deuxième capteur, activé par le dispositif d'interface 20 après détection de ce toucher tactile correspondant au premier signal, est un moteur de reconnaissance vocale apte à capter la commande vocale de l'utilisateur 26, puis à lui appliquer un algorithme de reconnaissance vocale afin de la retranscrire en une chaîne de caractères. Suivant ce premier cas d'utilisation, le dispositif d'interface 20 est en outre apte à vérifier que la donnée issue du moteur de reconnaissance vocale a la bonne syntaxe et la bonne sémantique en fonction d'un contexte opérationnel courant. Par exemple, si le pilote de l'aéronef 12 demande à saisir une fréquence radio, la donnée aura alors un format de type fréquence radio dans une bande de fréquence spécifique, et le dispositif d'interface 20 vérifiera alors que la chaîne de caractères issue du moteur de reconnaissance vocale correspond bien à une fréquence radio cohérente de la position courante de l'aéronef 12.

Un deuxième cas d'utilisation est un regard suivi d'une commande vocale (de l'anglais *Look and Talk*), pour lequel le premier signal, ou évènement déclencheur, est par exemple soit un appui sur un bouton physique dédié à la reconnaissance vocale, soit l'énoncé d'une commande vocale particulière, tel qu'un mot-clé dédié au déclenchement de la reconnaissance vocale. Suite à la détection de ce premier signal, le dispositif d'interface 20 active alors un capteur de suivi du regard en tant que deuxième capteur, afin d'acquérir un signal visuel de l'utilisateur 26, tel qu'un regard en direction d'une zone particulière sur un écran de visualisation d'une interface homme/machine, et un moteur de reconnaissance vocale en tant que deuxième capteur additionnel, pour acquérir une commande vocale énoncée par l'utilisateur 26 relativement à la zone vers laquelle il pointe son regard. L'homme du métier comprendra alors que ce deuxième cas d'utilisation est un exemple d'activation simultanée de deuxièmes capteurs 18.

L'homme du métier observera en outre que lorsque l'utilisateur 26 appuie sur le bouton physique dédié à la reconnaissance vocale, le dispositif d'interface 20 détecte un conflit potentiel avec un autre cas d'utilisation qui va être décrit par la suite, à savoir le cinquième cas d'utilisation correspondant à un appui suivi d'une commande vocale (de l'anglais *Push and Talk*). Le dispositif d'interface 20 va donc d'abord vérifier si la zone observée par l'utilisateur 26 correspond ou non à une zone éligible à la commande vocale, et le cas échéant activer le moteur de reconnaissance vocale pour la captation d'une commande vocale dédiée à cette zone. Le dispositif d'interface 20 activera en parallèle le moteur de reconnaissance vocale pour la captation d'une commande vocale globale correspondant au cinquième cas d'utilisation. Le dispositif d'interface 20 récupérera alors les données issues de ces deux activations du moteur de reconnaissance vocale, et vérifiera ensuite le niveau de confiance que le moteur de reconnaissance vocale attribue à chacun des deux résultats obtenus pour ces deux activations de reconnaissance vocale. Le dispositif d'interface 20 générera alors un message correspondant aux résultats de la reconnaissance vocale ayant le niveau de confiance le plus élevé, ou encore la probabilité la plus élevée.

L'homme du métier observera également que si le premier signal, ou évènement déclencheur, de ce deuxième cas d'utilisation est une commande vocale avec un mot-clé spécifique, alors le dispositif d'interface 20 détectera également un conflit potentiel avec un autre cas d'utilisation, à savoir le quatrième cas d'utilisation correspondant à un appel suivi d'une commande vocale (de l'anglais *Call and Talk*). Dans ce cas, le dispositif d'interface 20 procédera de manière analogue à ce qui a été indiqué ci-dessus, à savoir en activant à la fois le moteur de reconnaissance vocale pour la zone observée par le pilote, et le moteur de reconnaissance vocale pour une reconnaissance vocale globale, et générera le message en fonction du résultat le plus probable issu du moteur de reconnaissance vocale.

Un troisième cas d'utilisation correspond à un regard de l'utilisateur 26 suivi d'un déplacement (de l'anglais *Look and Move*), pour lequel le premier signal, ou évènement déclencheur, est soit un appui sur un bouton physique dédié à la reconnaissance gestuelle, soit l'énoncé d'une commande vocale correspondant à un mot-clé particulier, soit encore un signal gestuel particulier. Selon ce troisième cas d'utilisation, le dispositif d'interface 20 active alors, après avoir détecté l'évènement déclencheur précité, un capteur de suivi du regard en tant que deuxième capteur pour acquérir un regard de l'utilisateur 26 vers une zone particulière, telle qu'une zone sur un écran d'affichage de l'interface homme/machine, et un capteur de mouvement en tant que deuxième capteur additionnel afin d'acquérir une commande gestuelle de l'utilisateur 26 liée à la zone vers laquelle il regarde. L'homme du métier comprendra alors que ce troisième cas d'utilisation est un autre exemple d'activation simultanée de deuxièmes capteurs 18.

Un quatrième cas d'utilisation correspond à un appel suivi d'une commande vocale (de l'anglais *Call and Talk*), pour lequel le premier signal, ou évènement déclencheur est une commande vocale avec un mot-clé particulier afin de faire appel à un assistant électronique. Le dispositif d'interface 20 active alors, suite à la détection de cet évènement déclencheur, un moteur de reconnaissance vocale afin d'acquérir la commande vocale qui a été ensuite énoncée par l'utilisateur 26, pour en retranscrire une chaîne de caractères permettant ensuite de générer le message à destination du ou des systèmes avioniques 14. L'homme du métier observera que ce cas d'utilisation évite de passer par un alternat physique, tel qu'un bouton physique ou un toucher tactile.

Le cinquième cas d'utilisation correspond, comme indiqué précédemment, à l'appui suivi d'une commande vocale (de l'anglais *Push and Talk*), pour lequel le premier signal est un appui de l'utilisateur 26 sur le bouton physique dédié à la reconnaissance vocale, le deuxième signal étant ensuite l'énoncé d'une commande vocale par l'utilisateur 26. Selon ce cinquième cas d'utilisation, le dispositif d'interface 20 active alors, suite à la détection de cet appui sur le bouton physique, le moteur de reconnaissance vocale afin d'acquérir la commande vocale énoncée par l'utilisateur 26, puis de la retranscrire en une chaîne de caractères, servant ensuite au moteur de génération 36 pour générer le message et le transmettre à destination du ou des systèmes avioniques 14.

Un sixième cas d'utilisation correspond à un mode de bloc note à partir d'un message vocal de l'utilisateur 26 (de l'anglais *Speech Pad*)*,* pour lequel le premier signal est un appui sur un bouton physique, tel qu'un bouton PTT (de l'anglais *Push To Talk*), et le dispositif d'interface active alors suite à la détection de cet appui sur le bouton PTT, le moteur de reconnaissance vocale en tant que deuxième capteur, afin de détecter le message vocal de l'utilisateur 26 suivant cet appui sur le bouton PTT. Le dispositif d'interface 20 va alors recevoir la retranscription textuelle du message vocal énoncé par l'utilisateur et chercher à typer les données ainsi retranscrites pour envoyer des consignes d'action vers le ou les systèmes avioniques 14 afin d'assister l'utilisateur 26, tel que le pilote, en fonction du contenu de son message vocal. Par exemple, si l'utilisateur 26 prononce le message vocal suivant « cap 260°, montée au niveau de vol 100 », alors le dispositif d'interface 20 interprétera le nombre 260 comme une demande de changement de cap à 260°, et le nombre 100 comme une demande de changement d'altitude en montée à un niveau de vol 100. Le bouton PTT est un bouton présent dans le cockpit de l'aéronef qui permet à l'utilisateur 26, en particulier au pilote, de communiquer avec le contrôle du trafic aérien, également noté ATC (de l'anglais *Air Traffic Controller*), puis de parler avec le contrôle aérien.

On conçoit ainsi que le dispositif électronique d'interface 20 selon l'invention offre une meilleure interaction avec l'utilisateur 26 ou l'équipement électronique 28 pour communiquer ensuite avec le ou les systèmes avioniques 14, en permettant de prendre en compte différents signaux de l'utilisateur 26 ou de l'équipement électronique 28. Le dispositif d'interface 20 forme alors un coordinateur entre les éléments entre lesquels il est interconnecté, à savoir l'ensemble 16 de capteurs d'une part, et le ou les systèmes avioniques 14 d'autre part. En complément, le dispositif d'interface 20 forme également un interpréteur et facilite alors l'utilisation, par le ou les systèmes avioniques 14, du message qui leur est délivré en sortie.

## Revendications

1. Installation avionique (10) destinée à être embarquée à bord d'un aéronef (12), l'installation avionique (10) comprenant au moins un système avionique (14), un ensemble (16) de capteurs (18) et un dispositif électronique d'interface (20) connecté entre chaque système avionique (14) et l'ensemble (16) de capteurs,
l'ensemble de capteurs comprenant un premier capteur et deux moteurs de reconnaissance vocales avec une grammaire respective pour chaque moteur de reconnaissance vocale, les deux grammaires étant distinctes,
dans laquelle le dispositif électronique d'interface (20) comprend :
- un module de détection (30) configuré pour détecter un premier signal, le premier signal étant apte à être émis par un utilisateur (26) ou un équipement électronique (28) et reçu par un premier capteur (18) de l'ensemble (16) de capteurs ;
- un module d'activation (32) configuré pour activer au moins les deux moteurs de reconnaissance vocale de l'ensemble (16) de capteurs en fonction du premier signal détecté et de règles de détermination prédéfinies, les deux moteurs de reconnaissance vocale ainsi activés étant alors apte à capter chacun un deuxième signal de la part de l'utilisateur (26), le premier capteur étant de type distinct de celui des deux moteurs de reconnaissance vocale;
- un module d'acquisition (34) configuré pour acquérir chaque deuxième signal, reçu par chaque moteur de reconnaissance vocale; et
- un module de génération (36) configuré pour évaluer les deux deuxièmes signaux acquis de la part des deux moteurs de reconnaissance vocale, puis pour sélectionner le deuxième signal acquis ayant le niveau de confiance le plus élevé parmi les niveaux de confiance attribués par les deux moteurs de reconnaissance vocale et pour générer un message correspondant au deuxième signal acquis sélectionné et pour transmettre ledit message à un ou plusieurs systèmes avioniques (14) correspondants.

2. Installation avionique (10) selon la revendication 1, dans laquelle le dispositif électronique d'interface (20) comprend en outre :
- un deuxième module d'activation (38) configuré pour activer un dispositif (24) de traitement de chaque deuxième signal acquis, le dispositif de traitement (24) étant un dispositif de reconnaissance vocale externe au dispositif d'interface (20) ;
- un deuxième module d'acquisition (40) configuré pour acquérir chaque deuxième signal traité, de la part du dispositif de traitement (24),
le module de génération (36) étant alors configuré pour générer un message correspondant au deuxième signal traité.

3. Installation avionique (10) selon la revendication 2, dans laquelle le dispositif électronique d'interface (20) comprend en outre un module d'enregistrement (42) configuré pour enregistrer au moins un deuxième signal acquis,
le module d'enregistrement (42) étant de préférence configuré pour enregistrer au moins un deuxième signal acquis courant seulement en cas d'absence d'acquisition, par le deuxième module d'acquisition (40), d'un deuxième signal précédent traité suite à l'activation, par le deuxième module d'activation (38), du dispositif de traitement (24) pour le traitement d'un deuxième signal acquis précédent.

4. Installation avionique (10) selon l'une quelconque des revendications précédentes, dans laquelle le module de génération (36) est configuré en outre pour appliquer un traitement à au moins un des deuxièmes signaux en fonction de données de configuration du cockpit de l'aéronef (12), pour la génération dudit message.

5. Installation avionique (10) selon l'une quelconque des revendications précédentes, dans laquelle chaque premier capteur (18) de l'ensemble (16) de capteurs est du type choisi parmi le groupe consistant en : un capteur tactile, un capteur mécanique, un capteur sonore, un capteur d'image(s), un capteur de mouvement, un capteur de suivi du regard, un capteur physiologique et un récepteur de données.

6. Installation avionique (10) selon l'une quelconque des revendications précédentes, dans laquelle l'installation avionique (10) comprend en outre au moins une passerelle sécurisée (22), et le dispositif électronique d'interface (20) est connecté à chaque système avionique (14) via une passerelle sécurisée (22) correspondante.

7. Procédé de communication entre au moins un système avionique (14) et un ensemble (16) de capteurs (18), le procédé étant mis en oeuvre par une installation avionique (10) destinée à être embarquée à bord d'un aéronef (12) et comprenant un dispositif électronique d'interface (20) connecté entre chaque système avionique (14) et l'ensemble de capteurs (18),
l'ensemble de capteurs comprenant un premier capteur et deux moteurs de reconnaissance vocales avec une grammaire respective pour chaque moteur de reconnaissance vocale, les deux grammaires étant distinctes,
le procédé comprenant :
- la détection (100) d'un premier signal, le premier signal étant apte à être émis par un utilisateur (26) ou un équipement électronique (28) et reçu par un premier capteur (18) de l'ensemble (16) de capteurs ;
- l'activation (110) d'au moins les deux moteurs de reconnaissance vocale de l'ensemble (16) de capteurs en fonction du premier signal détecté et de règles de détermination prédéfinies, les deux moteurs de reconnaissance vocale ainsi activés captant alors un deuxième signal de la part de l'utilisateur (26), le premier capteur étant de type distinct de celui des deux moteurs de reconnaissance vocale;
- l'acquisition (120) de chaque deuxième signal, reçu par chaque moteur de reconnaissance vocale ; et
- la génération (150) d'un message, comprenant l'évaluation des deux deuxièmes signaux acquis de la part des deux moteurs de reconnaissance vocale, puis la sélection du deuxième signal acquis ayant le niveau de confiance le plus élevé parmi les niveaux de confiance attribués par les deux moteurs de reconnaissance vocale, et la génération d'un message correspondant au deuxième signal acquis sélectionné, et la transmission dudit message à un ou plusieurs systèmes avioniques (14) correspondants.

8. Programme d'ordinateur comportant des instructions logicielles qui, lorsqu'elles sont exécutées par un ordinateur, mettent en oeuvre un procédé selon la revendication 7.

## Patentansprüche

1. Avionikanlage (10) zum Mitführen an Bord eines Flugzeugs (12), wobei die Avionikanlage (10) mindestens ein Avioniksystem (14), eine Anordnung (16) von Sensoren (18) und eine elektronische Schnittstellenvorrichtung (20) umfasst, die zwischen jedes Avioniksystem (14) und die Anordnung (16) von Sensoren geschaltet ist,
die Sensoranordnung einen ersten Sensor und zwei Spracherkennungsmaschinen mit einer jeweiligen Grammatik für jede Spracherkennungsmaschine umfasst, wobei die beiden Grammatiken unterschiedlich sind,
wobei die elektronische Schnittstellenvorrichtung (20) umfasst:
- ein Erfassungsmodul (30), das so konfiguriert ist, dass es ein erstes Signal erfasst, wobei das erste Signal geeignet ist, von einem Benutzer (26) oder einem elektronischen Gerät (28) gesendet und von einem ersten Sensor (18) der Sensoranordnung (16) empfangen zu werden;
- ein Aktivierungsmodul (32), das so konfiguriert ist, dass es mindestens die beiden Spracherkennungsmaschinen der Anordnung (16) von Sensoren in Abhängigkeit von dem erfassten ersten Signal und vordefinierten Bestimmungsregeln aktiviert. Die beiden so aktivierten Spracherkennungsmaschinen sind dann geeignet, jeweils ein zweites Signal vom Benutzer (26) zu erfassen, wobei der erste Sensor von einem anderen Typ ist als der der beiden Spracherkennungsmaschinen;
- ein Erfassungsmodul (34), das so konfiguriert ist, dass es jedes zweite Signal erfasst, das von jeder Spracherkennungsmaschine empfangen wird; und
- ein Generierungsmodul (36), das so konfiguriert ist, dass es die beiden zweiten von den beiden Spracherkennungsmaschinen erfassten Signale auswertet und dann das zweite erfasste Signal mit dem höchsten Vertrauensniveau aus den von den beiden Spracherkennungsmaschinen zugewiesenen Vertrauensniveaus auswählt, und um eine Nachricht zu erzeugen, die dem ausgewählten zweiten erfassten Signal entspricht, und um die Nachricht an ein oder mehrere entsprechende Avioniksysteme (14) zu übermitteln.

2. Avionikanlage (10) nach Anspruch 1, wobei die elektronische Schnittstellenvorrichtung (20) ferner umfasst:
- ein zweites Aktivierungsmodul (38), das so konfiguriert ist, dass es eine Vorrichtung (24) zur Verarbeitung jedes zweiten erfassten Signals aktiviert, wobei die Verarbeitungsvorrichtung (24) eine Spracherkennungsvorrichtung außerhalb der Schnittstellenvorrichtung (20) ist;
- ein zweites Erfassungsmodul (40), das so konfiguriert ist, dass es jedes zweite verarbeitete Signal von der Verarbeitungsvorrichtung (24) erfasst,
wobei das Generierungsmodul (36) dann so konfiguriert ist, dass es eine Nachricht erzeugt, die dem zweiten verarbeiteten Signal entspricht.

3. Avionikanlage (10) nach Anspruch 2, wobei die elektronische Schnittstellenvorrichtung (20) außerdem ein Aufzeichnungsmodul (42) umfasst, das so konfiguriert ist, dass es mindestens ein zweites erfasstes Signal aufzeichnet,
wobei das Aufzeichnungsmodul (42) vorzugsweise so konfiguriert ist, dass es mindestens ein zweites aktuelles erfasstes Signal nur dann aufzeichnet, wenn das zweite Erfassungsmodul (40) kein zweites vorheriges Signal erfasst, das nach der Aktivierung der Verarbeitungsvorrichtung (24) durch das zweite Aktivierungsmodul (38) zur Bearbeitung eines zuvor erfassten zweiten Signals bearbeitet wurde.

4. Avionikanlage (10) nach einem der vorhergehenden Ansprüche, wobei das Generierungsmodul (36) zusätzlich konfiguriert ist, um eine Verarbeitung auf mindestens eines der zweiten Signale in Abhängigkeit von Konfigurationsdaten des Flugzeugcockpits (12) anzuwenden, um die Nachricht zu generieren.

5. Avionikanlage (10) nach einem der vorhergehenden Ansprüche, wobei jeder erste Sensor (18) der Sensoranordnung (16) von dem Typ ist, der aus der Gruppe ausgewählt ist, die aus Folgendem besteht: einem Berührungssensor, einem mechanischen Sensor, einem Schallsensor, einem Bild(er)sensor, einem Bewegungssensor, einem Blickverfolgungssensor, einem physiologischen Sensor und einem Datenempfänger.

6. Avionikanlage (10) nach einem der vorhergehenden Ansprüche, wobei die Avionikanlage (10) ferner mindestens ein sicheres Gateway (22) umfasst und die elektronische Schnittstellenvorrichtung (20) mit jedem Avioniksystem (14) über ein entsprechendes sicheres Gateway (22) verbunden ist.

7. Verfahren zur Kommunikation zwischen mindestens einem Avioniksystem (14) und einer Anordnung (16) von Sensoren (18), wobei das Verfahren von einer Avionikanlage (10) durchgeführt wird, die dazu bestimmt ist an Bord eines Flugzeugs (12) zu sein und eine elektronische Schnittstellenvorrichtung (20) zu umfassen, die zwischen jedem Avioniksystem (14) und der Anordnung von Sensoren (18) angeschlossen ist,
die Sensoranordnung einen ersten Sensor und zwei Spracherkennungsmaschinen mit einer jeweiligen Grammatik für jede Spracherkennungsmaschine umfasst, wobei die beiden Grammatiken unterschiedlich sind,
das Verfahren umfassend:
- Erfassen (100) eines ersten Signals, wobei das erste Signal geeignet ist, von einem Benutzer (26) oder einem elektronischen Gerät (28) gesendet und von einem ersten Sensor (18) der Anordnung (16) von Sensoren empfangen zu werden;
- Aktivierung (110) von mindestens den beiden Spracherkennungsmaschinen der Sensoranordnung (16) in Abhängigkeit von dem erfassten ersten Signal und vordefinierten Bestimmungsregeln, wobei die beiden so aktivierten Spracherkennungsmaschinen dann ein zweites Signal von dem Benutzer (26) erfassen, wobei der erste Sensor von einem anderen Typ als die beiden Spracherkennungsmaschinen ist;
- Erfassen (120) jedes zweiten Signals, das von jeder Spracherkennungsmaschine empfangen wird; und
- Erzeugen (150) einer Nachricht, umfassend das Auswerten der beiden zweiten von den beiden Spracherkennungsmaschinen erfassten Signale, dann das Auswählen des zweiten erfassten Signals mit dem höchsten Vertrauensniveau unter den von den beiden Spracherkennungsmaschinen zugewiesenen Vertrauensniveaus sowie das Erzeugen einer Nachricht, die dem ausgewählten zweiten erfassten Signal entspricht, und Senden dieser Nachricht an ein oder mehrere entsprechende Avioniksysteme (14).

8. Computerprogramm mit Softwareanweisungen, die, wenn sie von einem Computer ausgeführt werden, ein Verfahren nach Anspruch 7 implementieren.

## Claims

1. An avionic installation (10) intended to be on board an aircraft (12), the avionic installation (10) comprising at least one avionic system (14), a set (16) of sensors (18) and an electronic interface device (20) connected between each avionic system (14) and the set (16) of sensors,
the set of sensors comprising a first sensor and two voice recognition engines with a respective grammar for each voice recognition engine, the two grammars being different,
wherein the electronic interface device (20) comprises:
- a detection module (30) configured to detect a first signal, the first signal being able to be sent by a user (26) or a piece of electronic equipment (28) and received by a first sensor (18) from the set (16) of sensors;
- an activation module (32) configured to activate at least the two voice recognition engines from the set (16) of sensors as a function of the first detected signal and predefined determining rules, the two voice recognition engines thus activated then being able to detect a second signal from the user (26), the first sensor being of a type distinct from that of the two voice recognition engines;
- an acquisition module (34) configured to acquire every second signal, received by each voice recognition engine; and
- a generating module (36) configured to evaluate the two second signals acquired from the two voice recognition engines, then to select the second acquired signal having the highest confidence level among the confidence levels assigned by the two voice recognition engines, and to generate a message corresponding to the selected second acquired signal and to send said message to one or several corresponding avionic systems (14).

2. An avionic installation (10) according to claim 1, wherein the electronic interface device (20) further comprises:
- a second activation module (38) configured to activate one device (24) for processing each second acquired signal, the processing device (24) being a voice recognition device outside the interface device (20);
- a second acquisition module (40) configured to acquire every second processed signal, by the processing device (24),
the generating module (36) then being configured to generate a message corresponding to the second processed signal.

3. An avionic installation (10) according to claim 2, wherein the electronic interface device (20) further comprises a recording module (42) configured to record at least one second acquired signal,
the recording module (42) being preferably configured to record at least one current second acquired signal in case of absence of acquisition, by the second acquisition module (40), of a preceding second signal processed after the activation, by the second activation module (38), of the processing device (24) for processing a preceding acquired second signal.

4. An avionic installation (10) according to any one of the preceding claims, wherein the generating module (36) is further configured to apply processing to at least one of the second signals based on configuration data of the cockpit of the aircraft (12), for the generation of said message.

5. An avionic installation (10) according to any one of the preceding claims, wherein each first sensor (18) from the set (16) of sensors is of the type chosen from among the group consisting of: a touch-sensitive sensor, a mechanical sensor, a sound sensor, an image sensor, a movement sensor, an eye tracking sensor, a physiological sensor and a data receiver.

6. The avionic installation (10) according any one of the preceding claims, wherein the avionic installation (10) further comprises at least one secure gateway (22), and the electronic interface device (20) is connected to each avionic system (14) via a corresponding secure gateway (22).

7. A communication method between at least one avionic system (14) and a set (16) of sensors (18), the method being carried out by such an avionic installation (10) intended to be on board an aircraft (12) and comprising an electronic interface device (20) connected between each avionic system (14) and the set (16) of sensors,
the set of sensors comprising a first sensor and two voice recognition engines with a respective grammar for each voice recognition engine, the two grammars being different,
the method comprising:
- detecting (100) a first signal, the first signal being able to be sent by a user (26) or a piece of electronic equipment (28) and received by a first sensor (18) from the set (16) of sensors;
- activating (110) at least the two voice recognition engines from the set (16) of sensors as a function of the first detected signal and predefined determining rules, the two voice recognition engines thus activated then being able to detect a second signal from the user (26), the first sensor being of a type distinct from that of the two voice recognition engines;
- acquiring (120) every second signal, received by each voice recognition engine; and
- generating (150) a message, comprising the evaluation of the two second signals acquired from the two voice recognition engines, then the selection of the second acquired signal having the highest confidence level among the confidence levels assigned by the two voice recognition engines, and the generation of a message corresponding to the selected second acquired signal, and sending said message to one or several corresponding avionic systems (14).

8. A computer program comprising software instructions which, when executed by a computer, carry out a method according to claim 7.
